# EUROPEAN PATENT APPLICATION

(11) **EP 4 621 890 A1**
(43) Date of publication of application: **24.09.2025**
(21) Application number: 24305420.2
(22) Date of filing: 20.03.2024
(51) Int. Cl.: H01M 8/04992, H01M 8/04014, C25B 1/04, C25B 9/67, C25B 15/021, H01M 8/04029, H01M 8/04664

(54) **PREDICTIVE MAINTENANCE OF HYDROGEN-ENERGY SYSTEMS**

(71) Applicant: Université de Technologie de Belfort-Montbéliard, 90010 Belfort Cedex (FR); Centre National de la Recherche Scientifique, 75016 Paris (FR); Université de Franche-Comté, 25000 Besançon (FR); École Nationale Supérieure de Mécanique et des Microtechniques, 25030 Besançon Cedex (FR)
(72) Inventor: GIBEY, Gaultier, Belfort (FR); HISSEL, Daniel, Belfort (FR); PAHON, Elodie, Champagney (FR); ZERHOUNI, Noureddine, Besançon (FR)
(74) Representative: Bandpay & Greuter

(57) **Abstract**

The disclosure notably relates to a computer-implemented method for predictive maintenance of a system. The system comprises a hydrogen energy component, a cooling circuit, at least one actuator of the cooling circuit and at least one sensor collecting operating data during an operating of the system. The method comprises, during the operating of the system, the following three steps. The method comprises a first step of obtaining the operating data collected by to the at least one sensor. The method comprises a second step of estimating that a current state of the system is the fault state. The method comprises a third step of predicting a future state of the system. Such a method forms an improved solution for predicting maintenance of the system comprising the hydrogen energy component.

## Description

### TECHNICAL FIELD

The disclosure relates to the field of computer programs and systems, and more specifically to a method and program for predictive maintenance of a system, and to a system configured for performing the said method.

### BACKGROUND

Today, there are systems that include one or more hydrogen energy components (hereinafter referred to as "hydrogen-energy system"), such as hydrogen fuel cells (e.g., open or closed-cathode) or electrolyzer systems. These hydrogen energy components are configured for transforming energies from or to hydrogen (e.g., for producing electric energy based on hydrogen or vice versa). These hydrogen-energy systems generally include a cooling circuit for cooling the one or more hydrogen energy components, and one or more actuators of the cooling circuit, such as pumps, ventilators or control valves.

One limitation of such hydrogen-energy systems is that it is very complicated and time-consuming to detect faults and predicting breakdowns (or failures) in real time of these systems (e.g., linked to faults or breakdowns of the actuator(s)). Indeed, hydrogen-energy systems are complex and multi-physical, making it difficult to predict such failures. Thus, there is no current approach for predictive maintenance of such hydrogen-energy systems.

Within this context, there is still a need for an improved solution for predicting maintenance of a hydrogen-energy system.

### SUMMARY

It is therefore provided a computer-implemented method for predictive maintenance of a system. The system comprises a hydrogen energy component, a cooling circuit, at least one actuator of the cooling circuit and at least one sensor collecting operating data during an operating of the system. The collected operating data include, at least, temperature, current density and voltage values at the terminals of the hydrogen energy component. The system further comprises a memory storing a classification algorithm trained for estimating a state of the system among a predetermined set of states including a normal state, a fault state and a critical state. The method comprises, during the operating of the system, the following three steps. The method comprises a first step of obtaining the operating data collected by to the at least one sensor. The method comprises a second step of estimating that a current state of the system is the fault state by applying the classification algorithm to the obtained operating data. The method comprises a third step of predicting a future state of the system. The third step comprises predicting an evolution of the temperature and the voltage as a function of current density at the terminals of the hydrogen energy component. The third step further comprises predicting the future state of the system by applying the classification algorithm to the predicted evolution of the temperature and the voltage as a function of current density at the terminals of the hydrogen energy component.

The method may comprise one or more of the following:
- The memory further stores a first algorithm predicting an evolution of the temperature as a function of current density of the hydrogen energy component and a second algorithm predicting an evolution of the voltage as a function of current density at the terminals of the hydrogen energy component. The predicting of the evolution of the temperature and the voltage comprises applying the first and second algorithms to the obtained operating data;
- The classification algorithm takes as input the temperature, current density and voltage values for estimating the current state of the system;
- The system comprises several actuators of the cooling circuit. The database stores an experimentation database of actuator faults and breakdowns. The method comprises, after the estimating of the current state, determining which of the several actuators is causing the fault state of the system by comparing the collected operating data with values stored in the experimentation database in real time data;
- The predicted future state is the normal state. The method further comprises repeating the estimating of the current state based on the collected data and the predicting of the future state of the system when the predicted current state is the fault state;
- The predicted future state is the fault state. The method further comprises iteratively repeating the predicting of the future state of the system for successive time steps until the predicted state become the normal state or the critical state;
- The predicted future state is the critical state. The database stores the experimentation database of actuator faults and breakdowns. The method further comprises planning maintenance of the system by consulting the experimentation database;
- The planning of the maintenance of the system comprises:
   ∘ predicting a time to failure of the system;
   ∘ determining actions to be taken to repair the system; and
   ∘ providing to a user, via a human machine interface, the time to failure and the determined actions to repair the system;
- The predicted future state is the critical state. The method further comprises controlling the operating of the system so that it remains functional at least until the planned maintenance by reducing the current used by the system;
- The database stores data histories of several identical systems comprising collected data and corresponding observed actuator faults and breakdowns. The data histories have been stored on the database using a forgetting factor to eliminate redundant data. The learning of the classification algorithm is performed on the data histories;
- The hydrogen energy component is an open-cathode Proton Exchange Membrane Fuel Cell (PEMFC). The cooling circuit is an air cooling circuit. The at least one actuator includes a ventilator;
- The hydrogen energy component is a closed-cathode Proton Exchange Membrane Fuel Cell (PEMFC). The cooling circuit is a water cooling circuit. The cooling circuit comprises a primary circuit and a secondary circuit. The system comprises at least two actuators including two pumps, respectively for the primary circuit and the secondary circuit. The collected operating data optionally further includes temperature and voltage dynamics; and/or
- The hydrogen energy component is a Proton Exchange Membrane Water Electrolyzer (PEMWE). The cooling circuit is a water cooling circuit. The cooling circuit comprises a primary circuit and a secondary circuit. The system comprises at least two actuators including two pumps, respectively for the primary circuit and the secondary circuit. The collected operating data optionally further includes temperature and voltage dynamics.

It is further provided a computer program comprising instructions which, when executed by a computer, cause the computer to carry out the said method.

It is further provided a computer readable storage medium having recorded thereon the said computer program.

It is further provided a system comprising a hydrogen energy component, a cooling circuit, at least one actuator of the cooling circuit and at least one sensor collecting operating data during an operating of the system. The system is configured for performing the said method. The said computer program may be recorded on the memory of the system. The system may comprise a processor for executing the instructions of the said computer program to carry out the said method. The processor of the system may perform all the steps of the said method by executing the instructions of the said computer program.

### BRIEF DESCRIPTION OF THE DRAWINGS

Non-limiting examples will now be described in reference to the accompanying drawings, where:
- FIG. 1 shows a flowchart of an example of the method;
- FIG. 2 shows a detailed flowchart of an example of the method;
- FIG. 3 shows a flowchart of an example of the planning of the maintenance;
- FIG. 4 shows an example of predicted evolution of temperature and voltage as a function of current density;
- FIG.s 5 to 7 illustrate examples of hydrogen-energy systems;
- FIG. 8 illustrate an example of the server including the database; and
- FIG. 9 illustrate an example of the experimental database.

### DETAILED DESCRIPTION

It is provided a computer-implemented method for predictive maintenance of a system. The system comprises a hydrogen energy component, a cooling circuit, at least one actuator of the cooling circuit and at least one sensor collecting operating data during an operating of the system. The collected operating data include temperature, current density and voltage values at the terminals of the hydrogen energy component. The system further comprises a memory storing a classification algorithm trained for estimating a state of the system among a predetermined set of states including a normal state, a fault state and a critical state. The method comprises, during the operating of the system, the following three steps. The method comprises a first step of obtaining the operating data collected by to the at least one sensor. The method comprises a second step of estimating that a current state of the system is the fault state by applying the classification algorithm to the obtained operating data. The method comprises a third step of predicting a future state of the system. The third step comprises predicting an evolution of the temperature and the voltage as a function of current density at the terminals of the hydrogen energy component. The third step further comprises predicting the future state of the system by applying the classification algorithm to the predicted evolution of the temperature and the voltage as a function of current density at the terminals of the hydrogen energy component.

Such a method forms an improved solution for predicting maintenance of the system comprising the hydrogen energy component.

Notably, the method improves the maintenance of the system. Indeed, predicting the state of the system improves current maintenance solutions, which are very restrictive. Indeed, current maintenance solutions follow a fixed schedule (e.g., checking a component every 6 months), and by predicting the state of the system, the method allows carrying out maintenance work only when it is strictly necessary, thereby significantly reducing the maintenance effort, particularly in terms of the human resources required to visit the site of the system.

In particular, the method allows predicting the state of the system in a particularly complete way. Indeed, the method allows estimating the current state of the system, and even goes further by predicting a future state of the system. In particular, the classification algorithm is applied to the collected data for estimating the current state of the system. Regarding the future state, the method allows predicting this future state by predicting the evolution of the temperature and voltage at the terminals of the hydrogen energy component, and then, applying the classification algorithm to the predicted evolution of these parameters in order to predicting the future state of the system.

Moreover, the method is particularly efficient. Indeed, the method predicts the future state of the system only when the current state of the system is the fault state. It prevents performing the prediction of the evolution of the temperature and voltage values when the current state is normal. This allows reducing memory and computing resources used for predicting maintenance of the system. In addition, as the classification algorithm is applied by the system itself, the method enables failures in the vicinity of the system to be quickly detected and predicted for maintenance or control decisions.

Furthermore, the method is particularly precise, enabling maintenance work to be planned in advance. Indeed, firstly, the classification algorithm takes as input the temperature and the voltage as a function of current density at the terminals of the hydrogen energy, and thus considers the current density for predicting the state of the system. It allows the influence of current density value on temperature to be taken into account. Secondly, the classification algorithm outputs a state among the predetermined set of states including the normal state, the fault state and the critical state, and knowing the state of the system among these predetermined states is particularly relevant for planning the maintenance of the system. Indeed, when the predicted state is the fault state, it means that the maintenance may soon be due, and when the predicted state is the critical state, it means that the maintenance has to be planned. These three states are therefore particularly relevant to system maintenance.

Finally, it improves the availability, reliability, lifespan, safety and cost-effectiveness of hydrogen energy systems.

The method is computer-implemented. This means that steps (or substantially all the steps) of the method are executed by at least one computer, or any system alike (e.g., such as a processor of the system). Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method by a hydrogen-energy system adapted for this purpose. The system may comprise a processor coupled to a memory, the memory having recorded thereon a computer program comprising instructions for performing the method. The memory is any hardware adapted for such storage, possibly comprising several physical distinct parts (e.g. one for the program, and possibly one for the database).

The system is connected to the server including the database. By "database", it is meant any collection of data (i.e. information) organized for search and retrieval (e.g. a Cloud database). When stored on a memory, the database allows a rapid search and retrieval by the server. Databases are indeed structured to facilitate storage, retrieval, modification, and deletion of data in conjunction with various data-processing operations. The database may consist of a file or set of files that can be broken down into records, each of which consists of one or more fields. Fields are the basic units of data storage. The system may be configured to retrieve data stored on the database of the server through queries. Using keywords and sorting commands, the server may be configured to rapidly search, rearrange, group, and select the field in many records to retrieve or create reports on particular aggregates of data according to the rules of the database management system being used.

The database may store the operating data collected by the sensor(s) of the system. For example, the method may comprise sending by the system the data collected by the sensor(s) to the server, which may register these data in the database. The database may also store operating data collected by identical systems (i.e., other systems that are similar to the said system). These identical systems may also each include respective sensor(s) collecting data during the operating of these identical systems and may be each configured to send the data collected by respective sensor(s) to the server, which may register these data in the database (as data histories of these identical systems). By "identical system" it is mean any system which serves the same purpose, and which includes at least some (e.g., all) of the same components as the said system, for example the same (or a similar) hydrogen energy component, the same (or a similar) cooling circuit with the same (or similar) actuator(s) and the same (or similar) sensor(s) collecting operating data. Identical systems may for example be products manufactured in the same series, i.e., products manufactured at the same time (e.g., in one production run), or products which are manufactured using the exact same methods or with exactly the same materials list.

Alternatively or additionally, the database may store the experimentation database of actuator faults and breakdowns of these identical systems (also as data histories). The server may be configured to build the experimentation database of actuator faults and breakdowns, e.g., from the data collected by the sensor(s) of the identical system(s). The experimentation database may comprise, for a number (e.g., higher than 10 or 100) of faults and/or breakdowns of actuators occurred in the identical system(s), the evolution of the operating data collected by the identical system(s) before, during and/or after these faults and/or breakdowns (e.g., during a predetermined period before and after the faults or breakdowns). For each system comprising several actuators, the database may also store, for each fault or breakdown, which actuator in the system is faulty or failed. The faults of the actuators may each result from the failure of a component inside of the actuator. For example, the faults may include faults resulting from the failure of a propeller blade, bearing wear, electrical problems such as incorrect supply voltage in the case of a ventilator, or pipe obstruction, lubrication problems leading to friction, electrical problems such as incorrect supply voltage, bearing wear in the case of cooling pump. The breakdowns of the actuators may each result in the shutdown of the actuator. For example, the breakdowns may include breakdowns resulting from the blades are all broken, the removal of power to the ventilator, e.g., following the breakage of the power cable or breakdown with the control valve (electric or pneumatic), breakage of the power cable to the cooling pump.

Alternatively or additionally, the experimentation database may include, for each respective fault or breakdown of a given system, the maintenance performed on the given system for solving the respective fault or breakdown. For example, the experimentation database may comprise the remaining time before the failure of the given system and/or the one or more actions taken to repair the given system. For example, for the failure of the cooling pump, the one or more actions may include the replacement of the cooling pump. The remaining time before the failure may be the time remaining before the system stops working due to the temperature rise or voltage drop resulting from the failure of the cooling pump.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

"Maintenance of the system" designates any action or series of actions which is at least part of a system management process during system operation. Thus, the method may be included in a maintenance process, which may comprise, after performing the method, performing a maintenance of the system in order to repair the system. When the method includes the step of planning the maintenance, the maintenance process may perform the maintenance of the system at the time it is planned. For example, the maintenance may be planned when the system is shut down after operation, and maintenance process may carry out the maintenance of the system after the system has been shut down. The maintenance of the system may comprise repair and/or replacing one or more of components of the system (e.g., the one of the several actuators which has been determined has causing the fault state of the system). The repair and/or replacing of the components of the system may be carried out in the usual way.

The system comprises the hydrogen energy component. The hydrogen energy component is a component which is configured to manage hydrogen-based energy. The hydrogen energy component is configured for transforming energies from or to hydrogen (e.g., for producing electric energy based on hydrogen or vice versa). For example, the hydrogen energy component may be a component generating energy from hydrogen (such as fuel cells) or generating hydrogen from an energy source (such as an electric source e.g. in electrolyzers). The system also comprises the cooling circuit which is configured to cool the hydrogen energy component. The cooling circuit may be water- or air-based and may comprise a network fed by a cooling source. The hydrogen energy component may be in contact with the network to cool it with water or air cooled by the cooling source circulating in the network. The system also comprises the at least one actuator (e.g., the at least two actuators) of the cooling circuit. The at least one (or two) actuator(s) may include one (or two) or more pumps, for example on the primary and secondary circuits (e.g., when the cooling circuit is water-based with heat exchanger), one or more ventilators (e.g., when the cooling circuit is air-based) and/or one or more control valves.

The system also comprises the at least one sensor. The at least one sensor may include a temperature sensor configured to measure the temperature of the hydrogen energy component. The at least one sensor may include an ammeter configured to measure the current values (to calculate the current density) at the terminals of the hydrogen energy component. The current density may be equal to the result of multiplying the current value and an active surface of the hydrogen energy component. The at least one sensor may include a voltmeter configured to measure the voltage values at the terminals of the hydrogen energy component. The voltage and temperature dynamics may be calculated based on the values measured by the same sensors. The voltage and temperature dynamics may be based on the difference of respectively voltage and temperature values measured between two successive times t1 and t2 to obtain an indication of the dynamics relative to the faulty actuator/panel. The dynamics of temperature and voltage may also be used for estimating which actuator is faulty/breakdown.

The system further comprises the memory storing the classification algorithm. The memory may be directly integrated into a microprocessor of the system (e.g., a Raspberry PI 4B), for example with approximatively 22Gb available. The classification algorithm may be any machine learning algorithm configured to categorize data points (the operating data collected by the at least one sensor) into the predetermined set of states (e.g., the random forest algorithm). The classification algorithm may take as input a set of data points that include, for each interval of a set of regular and successive time intervals, temperature, current density and voltage values at the terminals of the hydrogen energy component. The classification algorithm may have an architecture that includes the number of trees, the minimum of samples required to divide an integer node and to be a leaf, the maximum tree depth and the number of features to be considered for the best division. To set these parameters, the grid search technique may be used. The current density values improve the prediction of the state of the system. Indeed, the value of current density influences the temperature and the voltage of the system, and for example, at twice the current density, the temperature will be much higher and the voltage will be much lower. By taking values of current density, temperature and voltage as input of the classification algorithm, the method improves the accuracy of the predicted state for the system.

The predetermined set of states includes the normal state, the fault state and the critical state. The normal state may represent a state of normal operating of the system. In that state, all system components may be operating normally, and the current density, temperature and voltage values may be nominal. The fault state may represent a state in which one or more anomalies are detected in the measured values. For example, an abnormal rise in temperature may be measured. In the fault state, one or more components (e.g., the at least one or two actuator(s) of the cooling circuit) of the system may be faulty (but not necessarily). These anomalies may resolve themselves. The critical state may represent a state in which one or more components (e.g., the actuator(s)) of the system are faulty, and a maintenance operation may be planned. In the critical state, the fault or failure of the one or more components of the system may lead to system breakdown (e.g., after a given remaining time to failure, which depends on the fault/failure).

For estimating the current state, the classification algorithm may take as input the last collected data, i.e., a first set of data points that include, for each interval of a past set of regular and successive time intervals, temperature, current density and voltage values (e.g., using a, e.g. fixed, sliding window framing the last operating data, the sliding window moving in real time along the time series to allow constant estimation of the system state). For example, the classification algorithm may take as input the last 10, 50 or 100 measurements collected by the at least one sensor. The estimating current state is a state estimated for the system at the current time (i.e., the state of the system at the time the classification algorithm is applied).

For predicting the future state, the classification algorithm may take as input the predicted evolution of the temperature and voltage as a function of current density. The predicted evolution may comprise, for each interval of a future set of regular and successive time intervals (corresponding to a future period following the applying of the classification algorithm), temperature, current density and voltage values at the terminals of the hydrogen energy component. In examples, in addition to the predicted values, the classification algorithm may also take as input a portion of the real collected data (e.g., the last measurements just before the predicted evolution). The predicted future state is a state predicted for the system in a period following the applying of the classification algorithm (e.g., several minutes, one hour or one day after the current time).

The obtaining of the operating data may comprise collecting the operating data (i.e., the temperature, current density and voltage values at the terminals of the hydrogen energy component) and recording the collected operating data, e.g., in the memory of the system (e.g., together with the measurement time). In examples, the method may also comprise sending, by the system, the collected operating data to the server and recording the sent operating data in the database of the server (e.g., to complete the experimental database).

The estimating of the current state may comprise the applying of the classification algorithm to the obtained operating data (i.e., providing as input the obtained operating data to the classification algorithm), the applying resulting in the outputting, by the classification algorithm, of a current state for the system which is the fault state. It means that the classification algorithm estimates from the collected data that a fault may have occurred in the system. The estimating of the current state may then comprise recording that the current state is now the fault state. After that (e.g., immediately after the recording of the new state), the method comprises the predicting of the future state based on the predicted evolutions (temperature and voltage as a function of current density). The method thus allows predicting the future state only when a fault is detected, which allows conserving computing and energy resources.

The predicting of the future state is performed similarly than the estimating of the current state, but with the predicted values of temperature and voltage as a function of current density. The predicting of the future state comprises firstly the predicting of the evolution of the temperature and the voltage as a function of the current density. For example, the predicting of the evolution may consider the current density value of the current density and may comprise predicting an evolution of the temperature and voltage values as a function of this current density value of the current density. The predicted evolution may comprise a set of points including, for each interval of a set of regular and successive time intervals (corresponding to a period following the applying of the classification algorithm), temperature, current density and voltage values at the terminals of the hydrogen energy component.

Then, after the prediction of the evolution of the values, the predicting of the future state may comprise applying the classification algorithm to the predicted values of temperature and voltage as a function of current density so as to predict a future state of the system according to the predicted values (similarly than for the estimating of the current state but by taking as input the predicted evolution of the temperature and voltage values as a function of current density instead of the collected data).

In examples, the memory may further store a first algorithm predicting an evolution of the temperature as a function of current density of the hydrogen energy component and a second algorithm predicting an evolution of the voltage as a function of current density at the terminals of the hydrogen energy component. In that case, the predicting of the evolution of the temperature and the voltage may comprise applying the first and second algorithms to the obtained operating data so as to predict the evolution of the temperature and the voltage as a function of current density at the terminals of the hydrogen energy component. For example, the first algorithm may take as input the temperature values as a function of current density of the last collected data (e.g., the values temperature as a function of current density in the past set of time intervals) and may output a set of points including values of temperature as a function of current density in each time interval of the future set of time intervals. The first algorithm may also take as input a value of the current density (e.g., the current density value, such as the last measured value). The second algorithm may take as input the voltage value as a function of the current density of the last collected data (e.g., the values of current density and voltage in the past set of time intervals) and may output a set of points including values of voltage in each time interval of the future set of time intervals. The second algorithm may also take as input a value of the current density (e.g., the current density value, such as the last measured value). The first and second algorithm may have been trained with the collected data recorded in the database of the server (e.g., data collected by identical system(s)). Another possible method is to train the prediction algorithms (temperature and voltage) directly online, i.e. without prior training. For example, the data collected by the identical systems may be considered as training samples, and the first and second algorithm may be trained to predict the evolution of these collected data (e.g., to predict temperature evolution based on current density and temperature values for the first algorithm and voltage evolution based on current density and voltage values for the second). The first and second algorithms may each be any machine learning algorithm such as, ARIMA (Autoregressive Integrated Moving Average) or ARIMAX (Autoregressive Integrated Moving Average with eXogenous variables) for online training without prior training, or BiESN (Bidirectional Echo State Network) or BiLSTM (Bidirectional Long-Short Term Memory) for preliminary training by collected data recorded in the database of the server. The first and second algorithms may each have an architecture that includes an ARIMA model with automatic parameter optimization, or a BiESN which is an extension of the classic ESN, enabling data to be learned in both directions to improve prediction performance.

In examples, when the current density is variable, so if it changes, the method may comprise repeating the prediction of future state after a stabilization time to wait for the temperature and voltage to stabilize. The repeating of the prediction of future state after a stabilization time improves the accuracy of the prediction. Indeed, the current density variations influences the temperature values. For example, when the current changes from 65A to 85A, the temperature control will overshoot, thus increasing the temperature before it returns to the setpoint temperature corresponding to a normal state. For example, the normal operating temperature may be 50°C for 85A with an overshoot of 5°C raising the temperature to 55°C and may be 50°C for 65A with an overshoot of 2°C. When the current changes from 65A to 85A, the instant value may typically increase to 55°C for 65A, while the system is not faulty but stabilizing.

In examples, when the predicted future state is the critical state, the method may further comprise controlling the operating of the system so that it remains functional at least until planned maintenance (i.e., such that system failure does not occur before the planned maintenance) by reducing the current used by the system. For example, the current may be reduced to a predetermine current value (e.g., 45A) which is a value that will not cause the system to fail. This reduces power but allows the system to remain in operation while awaiting maintenance. Moreover, fuel cell systems are almost always accompanied by a battery, which can be modulated in terms of power to maintain the system's output. For example, the power of the fuel cell may be 500W at 65A and the power of the battery 500W, i.e. 1kW in all. If the method reduces the fuel cell power to avoid system failure (by reducing the current), the battery can be modulated in power to ensure 1kW output of the system, for example the fuel cell operates at 400W for 45A, then the method may increase the battery power to 600W to ensure 1kW output. This may be performed to maintain the output power at 1kW, for example. In another case, where power reduction may be used, the system power may be reduced only while awaiting maintenance. This improves system availability, reliability and safety. This may be used for example in stationary or transport applications: for example, the car system may limit power to avoid a breakdown, enabling the user to go to the garage or park in an emergency area, thus avoiding potential dangers (particularly if a sudden breakdown occurs on the freeway).

In examples, the system may comprise several actuators of the cooling circuit. In that case, the database may store (e.g., in addition to the collected data) the experimentation database of actuator faults and breakdowns. The method may comprise, after the estimating of the current state, the determining of which of the several actuators is causing the fault state of the system. For example, the determining of which of the several actuators is causing the fault state of the system may be performed by comparing voltage and temperature dynamics (between the database and real-time data), which indicate whether it is the actuator on the primary or secondary side of the cooling circuit that has failed. The determining of which of the several actuators is causing the fault state may be performed by consulting the experimental database and comparing it with real-time data (voltage and temperature dynamics are compared, indicating whether the actuator on the primary or secondary side of the cooling circuit is faulty). For example, the method may comprise requesting the server (together with the collected data) to identify an identical system having similar collected data registered in the experimental database (e.g., showing a rapid or slower rise in temperature) and receiving from the server the actuator in fault for this similar identified similar system (e.g., the cooling pump for the secondary circuit in case of rapid rise in temperature and the cooling pump for the primary circuit in case of lower rise in temperature).

In examples, the predicted future state may be the normal state. The predicted evolution thus indicates that the system will return to the normal state. In that case, the method may further comprise repeating the preceding steps for estimating again the current state and, when the current state is the fault state, the future states of the system. The estimating of the current state and the predicting of the future state may be performed in the same way as the first time but based on the new data collected by the sensor(s) between the two repetitions.

In examples, the predicted future state may be the fault state (i.e., the system remains in the fault state). In that case, the method may further comprise iteratively repeating the predicting of the future state of the system for successive time steps until the predicted state become the normal state or the critical state. It allows monitoring the state of the system and predicting when it will return to normal or be in a critical state requiring intervention.

In examples, the predicted future state may be the critical state. In that case, the method may further comprise planning maintenance of the system by consulting the experimentation database. For example, the planning of the maintenance may comprise requesting the server (together with the collected data) to identify an identical system having similar collected data registered in the experimental database (e.g., showing a rapid rise in temperature), receiving from the server the maintenance planned for this identified similar system (e.g., replacement of the cooling pump of the secondary circuit in case of rapid rise in temperature) and planning the same maintenance for the present system (i.e., the replacement of the cooling pump).

In examples, the planning of the maintenance of the system may comprises predicting the time to failure of the system and determining actions to be taken to repair the system. For example, the experimental database may include, for each fault or breakdown, the corresponding time to failure of the system. In that case, the server may also send the time to failure recorded for the identical system previously identified, and the system may consider the time to failure sent by the server as the predicted time to failure of the system. Similarly, the experimental database may include, for each fault or breakdown, the actions taken to repair the system, and the determined actions may be sent by the server to the system. The planning of the maintenance may also comprise providing to a user, via a human machine interface, the predicted time to failure and the determined actions. For example, the method may comprise displaying on a screen the predicted time to failure and the determined actions to be taken, e.g., together with the availability of operators or repair machines, so that the user may easily program the actions to be taken by assigning said operators or repair machines to carry out these actions.

In examples, the database may store data histories of several identical systems (as previously discussed). In that case, the data histories of these identical systems may have been stored on the database using a forgetting factor to eliminate redundant data. For example, the server may be configured to filter the data sent by the identical systems so as to remove redundant data, and to record in the database the filtered data. The filtering of the data may comprise using the said forgetting factor to eliminate data already recorded in the database (e.g., the data collected for a same fault of a same system may be recorded only once). The forgetting factor may be used by comparing real-time data with data already present in the database, using a threshold of typically 1.5% difference. This threshold may be used for voltage and temperature, as a function of current density. For example, when the database stores a data point at 65A having a tension of 7V and a temperature of 50°C, the forgetting factor may be used for removing data points at 65A having a voltage value between and 6.895V and 7.105V and a temperature value between 49.25°C and 50.75°C. The recording of the data histories using a forgetting factor allows eliminating redundant data and therefore reduces the amount of storage used, while maintaining a high level of stored information.

In examples, the classification algorithm may have been learned using the data histories of identical systems stored in the database (e.g., stored using the forgetting factor or not). The data histories of identical systems may thus be used as a training dataset for the classification algorithm. The faults or breakdowns recorded in the database may each be considered as a respective training sample, and may comprise the data collected during the fault or breakdown and the corresponding state of the identical system during the fault or breakdown. The classification algorithm may be trained to predict these system states based on the data collected by the identical systems for each fault or breakdown.

In examples, the system may be a hybrid system, and may comprise several hydrogen energy components, and for each hydrogen energy component, a respective cooling circuit. For example, the system may be an energy-independent district whose electrical energy is produced by renewable energies. As renewable energies are intermittent, the system may comprise an electrolyzer for producing hydrogen to be stored during periods when electrical energy production exceeds consumption (typically in summer). The system may also comprise a hydrogen fuel cell for returning this stored hydrogen in the form of electrical energy during periods of under-production of electrical energy in relation to consumption (typically in winter). In that case, the method may repeat all the steps for each hydrogen energy component (i.e., for the hydrogen fuel cell and for the electrolyzer in the previously discussed example).

In examples, the cooling circuit may be a water cooling circuit. For example, the hydrogen energy component may be a closed-cathode Proton Exchange Membrane Fuel Cell (PEMFC) or a Proton Exchange Membrane Water Electrolyzer (PEMWE). In that case, the cooling circuit may comprise a primary circuit and a secondary circuit. The system may comprise at least two actuators including two pumps, respectively for the primary circuit and the secondary circuit. Optionally, the collected operating may also be used to calculate temperature and voltage dynamics. The temperature and voltage dynamics may be used for identifying which actuator has failed (primary circuit pump or secondary circuit pump).

With reference to FIG.s 1 to 9, examples of implementation of the method are now discussed.

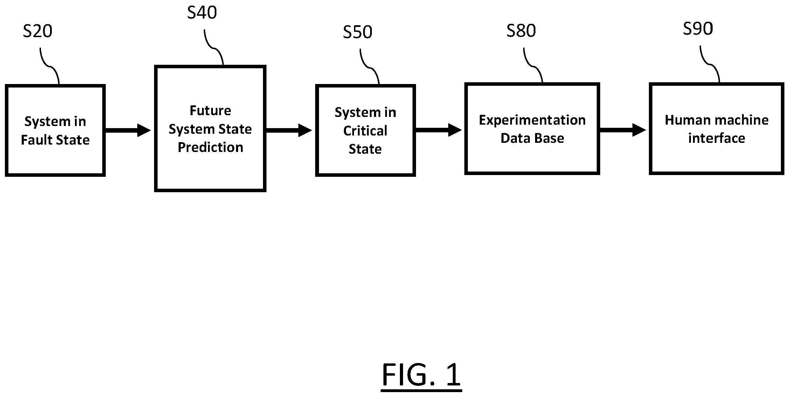

FIG. 1 shows a flowchart of an example of the method. The method comprises, during the operating of the system, the following steps. The method comprises a first step of obtaining the operating data collected by to the at least one sensor (not shown in the figure). The method comprises a second step of estimating S20 that a current state of the system is the fault state by applying the classification algorithm to the obtained operating data. The classification algorithm takes as input the last temperature, current density and voltage values measured by the at least one sensor(s) for estimating the current state of the system.

The method comprises a third step of predicting a future state of the system. The third step comprises predicting S40 an evolution of the temperature and the voltage as a function of current density at the terminals of the hydrogen energy component. The predicting S40 of the evolution of the temperature and the voltage comprising applying the first and second algorithms to the obtained operating data. The third step further comprises predicting S50 the future state of the system by applying the classification algorithm to the predicted evolution (i.e., by the first and second algorithms) of the temperature and voltage as a function of current density at the terminals of the hydrogen energy component.

In this example, the future state predicted at step 50 is the critical state. The method thus comprises a fourth step of planning maintenance of the system. The fourth step comprises the step of consulting S80 the experimentation database to predict a time to failure of the system (time to system breakdown) and to determine actions to be taken to repair the system. The fourth step also comprises the step of providing S90 to a user, via a human machine interface, the time to failure and the determined actions. The providing S90 comprises displaying the predicted time to failure and the determined actions to be taken to repair the system.

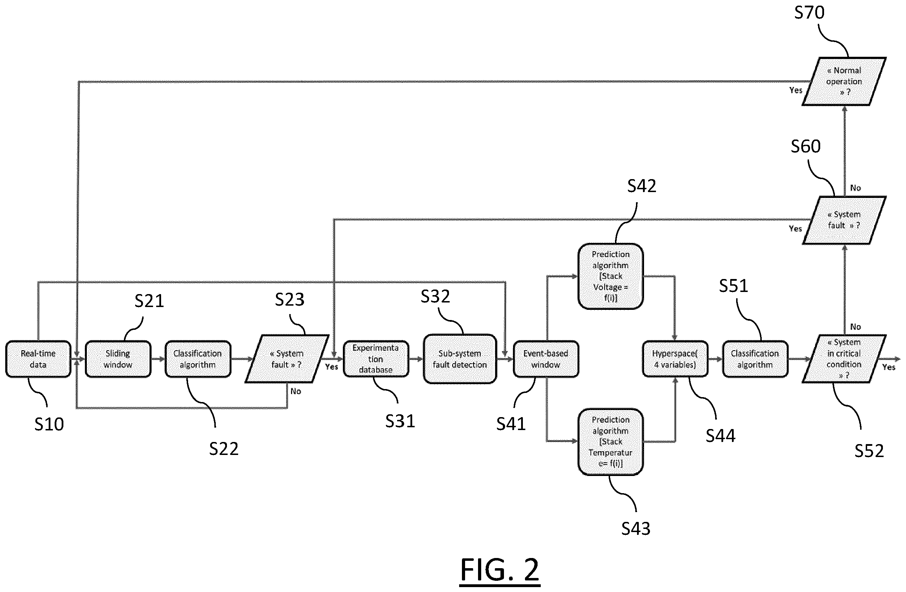

FIG. 2 shows a detailed flowchart of an example of the method. The memory of the system stores instructions which, when executed by a processor of the system, cause the processor to carry out at least part (e.g., all of) the steps of this detailed flowchart. During the operating of the system, the method comprises the following steps. The method comprises a first step of obtaining S10 the operating data collected by to the at least one sensor. The obtaining S10 comprises collecting the operating data (i.e., the temperature, current density and volage values at the terminals of the hydrogen energy component) and recording the collected operating data in the memory of the system (together with the measurement time).

The method comprises a second step of estimating S20 that a current state of the system is the fault state. The second step comprises determining S21 the last temperature, current density and voltage values measured by the at least one sensor(s) (using a sliding window) and applying S22 the classification algorithm to the determined last measured values. The classification algorithm takes as input the determined last measured values and outputs a predicted current state of the system. The second step then comprises determining S23 whether the predicted current state is the fault state. When the predicted current state is the normal state, the method comprises repeating the second step including the sub-steps S21, S22 and S23 with the new measurement values obtained at step S10 during the previous executing of the sub-steps S21, S22 and S23. The method repeats the second step until the predicted current state becomes the fault state.

When the predicted current state is the fault state, the method comprises a third step of determining which of the actuators is causing the fault state of the system by consulting the experimentation database. The system comprises several actuators of the cooling circuit, and the third step allows determining which of these several actuators is causing the fault state of the system. The third step comprises requesting S31 the server to identify an identical system having similar collected data registered in the experimental database (e.g., showing a rapid rise in temperature). This requesting S31 may comprise sending by the system to the server a request to identify this identical system (e.g., the request also including the collected data). The third step then comprises receiving 32 from the server the actuator in fault for this identified similar system (e.g., the ventilator in case of rapid rise in temperature). The actuator causing the fault state of the system is considered as the one sent by the server for the identified similar system.

The method then comprises a fourth step of predicting S40 an evolution of the temperature and the voltage as a function of current at the terminals of the hydrogen energy component. The fourth step comprises determining S41 the last temperature, current density and voltage values measured by the at least one sensor(s) (e.g., similarly than step S21 using a sliding window). The fourth step comprises predicting S42 an evolution of the temperature as a function of current density at the terminals of the hydrogen energy component by applying the first algorithm to the determined S10 last values (e.g., to the temperature and current density values). The fourth step comprises predicting S43 an evolution of the voltage as a function of current density at the terminals of the hydrogen energy component by applying the second algorithm to the determined S10 last values (e.g., to the temperature, voltage and current density values). The fourth step then comprises projecting S44 the predicted evolution of temperature and voltage as a function of current density in a hyperspace of four variables (temperature, voltage, current density and time).

The method then comprises a fifth step of predicting the future state of the system. The fifth step comprises applying S51 the classification algorithm to the predicted evolution of temperature and voltage as a function of current density (e.g., projected in the hyperspace), the classification algorithm outputting the predicted future state. The fifth step then comprises determining S52 whether the predicted future state is the critical state.

When the method determines that the predicted future state is not the critical state, the method comprises determining S60 whether the predicted future state remains the fault state. When the predicted future state remains the fault state, the method comprises iteratively repeating the predicting of the future state of the system (including the sub-steps S31, S32, S41, S42, S43, S44, S51 and S52 with the new measurement values measured during the previous execution of these steps) for successive time steps. The method repeats the predicting of the future state until the predicted state become the normal state or the critical state.

When the method determines that the predicted future state remains not the fault state, the method comprises determining S70 whether the predicted future state is the normal state. When the predicted future state is the normal state, it means that the detected fault did not require maintenance (it resolved itself). The method thus comprises repeating all the steps with the new measurement values measured during the previous execution, i.e., including the estimating of the current state based on the last collected data and the predicting of the future state of the system when the new predicted current state is the fault state.

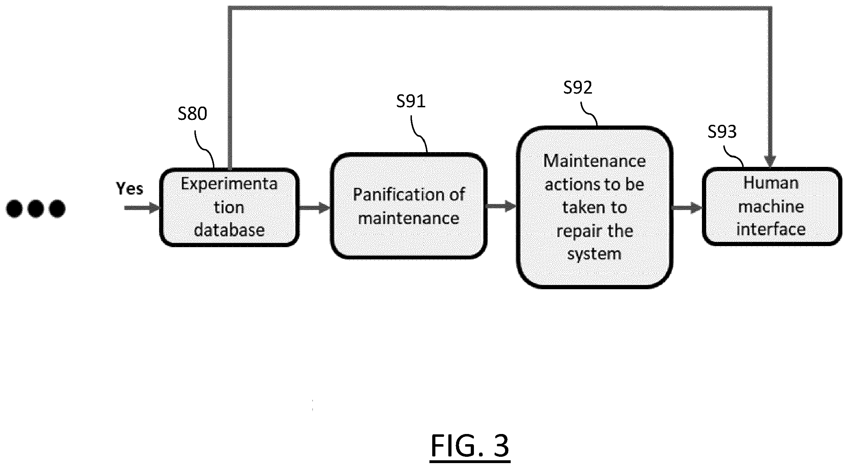

When the predicted future state is the critical state, it means that the detected fault requires planning a maintenance (it will not resolve itself). The method thus comprises a sixth step of planning maintenance of the system. This sixth step is now discussed in reference to the flowchart of FIG. 3. The sixth step comprises the step of consulting S80 the experimentation database for planning maintenance of the system. The consulting S80 comprises requesting the server (together with the collected data) to identify an identical system having similar collected data registered in the experimental database (e.g., showing a rapid rise in temperature). Then, the sixth step comprises receiving from the server the time to failure recorded for this identified similar system and predicting the same time to failure for the present system. The sixth step also comprises receiving S91 from the server the maintenance planned for this identified similar system (e.g., including actions to be taken to repair the identified similar system such as replacing the ventilator in case of rapid rise in temperature) and planning S92 the same maintenance for the present system (i.e., actions to be taken to repair the present system such as the replacement of the ventilator). The sixth step also comprises the step of providing S90 to a user, via a human machine interface, the time to failure and the determined actions. The providing S90 comprises displaying the predicted time to failure and the determined actions to be taken to repair the system.

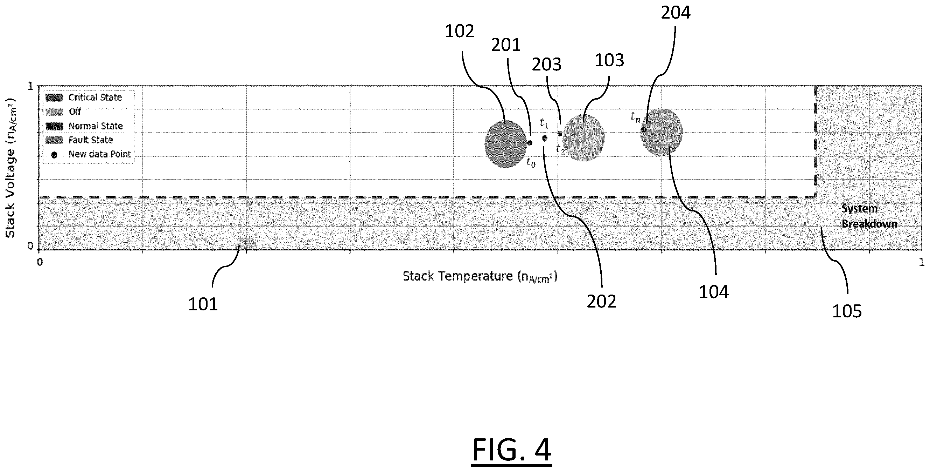

FIG. 4 shows an example of predicted evolution of temperature and voltage as a function of current density. In particular, the figure shows the predicted evolution projected in the hyperspace of four variables (temperature, voltage, current density and time). The figure shows the areas corresponding to the different states of the system. The area 101 corresponds to the position in this hyperspace when the system is shutdown (off). The area 102 corresponds to the position in this hyperspace when the system is on and operating normally (normal state). The area 103 corresponds to the position in this hyperspace when the system is in the fault state (the maintenance may soon be due). The area 104 corresponds to the position in this hyperspace when the system is in the critical state (the maintenance has to be planned). The area 105 corresponds to the position in this hyperspace when the system is down. The figure also shows the predicted evolution of temperature and voltage as a function of current density 201, 202, 203, 204. The predicted evolution shows that the system will enter in the fault and critical states successively, necessitating maintenance planning for the system before it fails.

The method allows monitoring progress and issuing a decision aid based on the new data acquired in real time. The reference values are in the "On" state 102. When the current state moves away from the "On" state 102 towards the fault state 103, the method comprises launching predictions to monitor the future state of the system. To find out, the classification algorithm predicts the state of the system using the outputs of the prediction algorithms, and the method may optionally comprise using a Euclidean distance calculation between the measurement and the prediction to find out in which direction the state of the system is heading.

When the predicted state moves further away from point t₁ (e.g., sampling every 10s), then the method may comprise restarting the predictions to find out whether the system state moves towards the fault state 103 or back towards the "normal" state 102. Returning to the "normal" state 102 indicates that the system is in the presence of a reversible fault. The method may optionally perform a distance calculation between the center point of each class and the predicted data to determine whether to return to the "normal" state 102 or the fault state 103. The method may repeat this principle until the system returns to the "normal" state 102.

When the predicted state reaches point t₂, the method may comprise registering at least one fault (e.g., the pump line is bolted, resulting in poor cooling to the system). The method may comprise querying the experimental database of identical system to find out exactly which subsystem is faulty.

When the predicted state reaches point tₙ, the method may comprise recording a failure (e.g., the pump no longer functions at all) or a more severe fault. In the same way, the method may comprise querying the experimental database to find out exactly which subsystem has failed or which subsystem is severely faulty.

Finally, the method may comprise querying again the experimental database, using the data values and the exact knowledge of which sub-system has failed or severely fault, to accurately predict the time before a system failure occurs (first information of the time before system breakdown), and then using the temperature and voltage predicted in order to refine the prediction in real time. The method may comprise transmitting this information to the Human Machine Interface to inform operators, for example, cooling pump down, time remaining before system failure, maintenance planning and/or maintenance actions to be carried out in order to repair the system.

In examples, the method may comprise re-training the algorithms as soon as new data appears in the experimental database, e.g., corresponding to data never seen before, in the case of the use of a previously trained algorithm. On the other hand, if redundant data appears, the method may comprise forgetting them (using the forget factor), so as not to overload the cloud with redundant data.

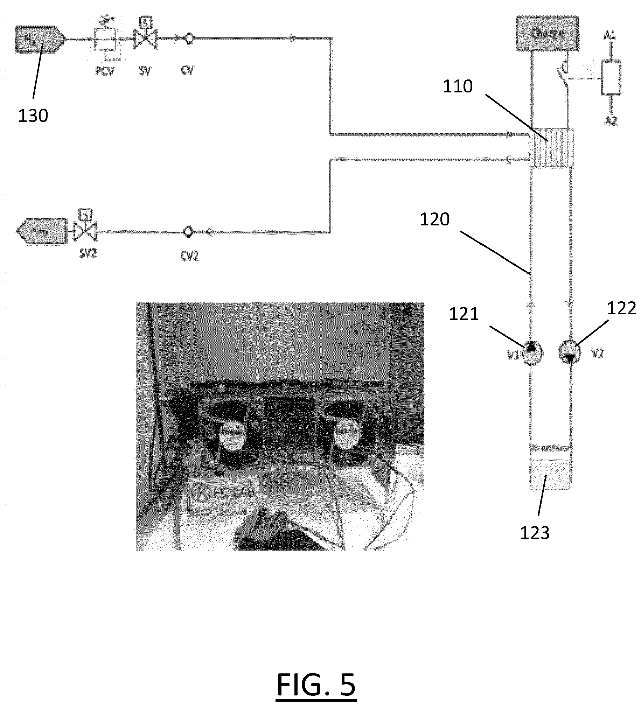

FIG. 5 illustrates a first example of hydrogen-energy system. In this first example, the hydrogen energy component is an open-cathode Proton Exchange Membrane Fuel Cell (PEMFC) 110. The PEMFC is configured to generate electrical energy from hydrogen coming from a hydrogen source 130. The PEMFC is cooled by a cooling circuit 120, which is an air cooling circuit. The cooling source of the cooling circuit 120 is the outside air. The actuators of the cooling circuit 120 include two ventilators 121, 122 blowing incoming and outgoing air respectively onto the PEMFC 110.

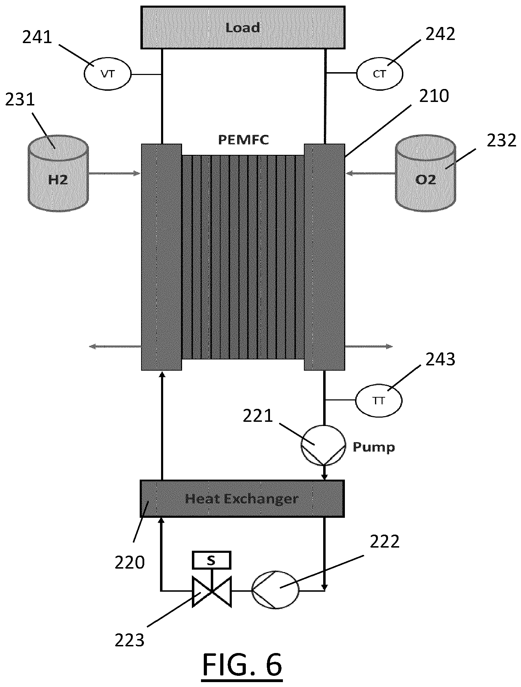

FIG. 6 illustrates a second example of hydrogen-energy system. In this second example, the hydrogen energy component is a closed-cathode Proton Exchange Membrane Fuel Cell (PEMFC) 210. The PEMFC 210 is configured to generate electrical energy from hydrogen coming from a hydrogen source 231 and dioxygen coming from a dioxygen source 232. The PEMFC 210 is cooled by a cooling circuit 220, which is a water cooling circuit. The cooling source of the cooling circuit 220 is a heat exchanger. The cooling circuit 220 includes an actuator which is a pump 221 for the primary circuit. The cooling circuit includes two actuators which are a pump 222 and solenoid valve 223 for the secondary circuit. The hydrogen-energy system also includes three sensors: a voltage transmitter 241 measuring the voltage at the terminals of the PEMFC 210, a current transmitter 242 measuring the current at the terminals of the PEMFC 210 and a temperature transmitter 243 measuring the temperature of the PEMFC 210.

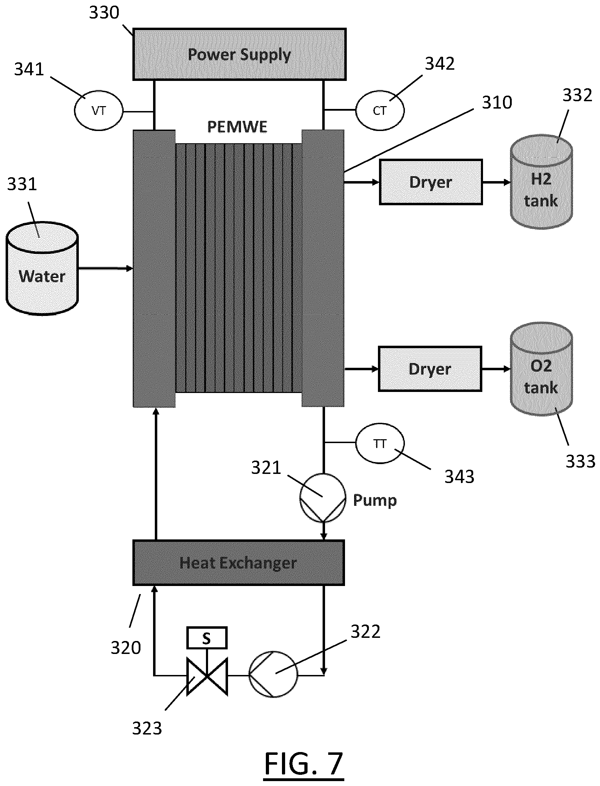

FIG. 7 illustrates a third example of hydrogen-energy system. In this second example, the hydrogen energy component is a Proton Exchange Membrane Water Electrolyzer (PEMWE) 310. The PEMWE 310 is configured to generate hydrogen (stored in a hydrogen tank 332) and dioxygen (stored in a dioxygen tank 333) from electrical energy coming from a power supply 330 and water 331. The PEMWE 310 is cooled by a cooling circuit 320, which is a water cooling circuit. The cooling source of the cooling circuit 320 is a heat exchanger. The cooling circuit 320 includes an actuator which is a pump 321 for the primary circuit. The cooling circuit 320 includes two actuators which are a pump 322 and a solenoid valve 323 for the secondary circuit. The hydrogen-energy system also includes three sensors: a voltage transmitter 341 measuring the voltage at the terminals of the PEMWE 310, a current transmitter 342 measuring the current at the terminals of the PEMWE 310 and a temperature transmitter 343 measuring the temperature of the PEMWE 310.

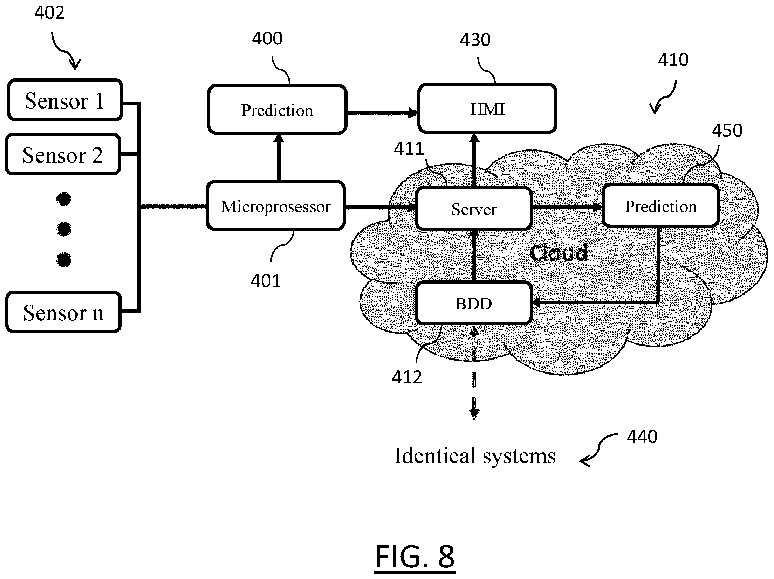

FIG. 8 illustrate an example of the server including the database. The figure illustrates the system that includes a microprocessor and a memory storing instruction for performing the current and future predictions 400 according to the said method based on the data collected by the sensors 402 of the system. The system is connected to a Cloud platform 410 that includes the server 411 including the database storing the experimental database. The experimental database stores data collected by other identical systems 440. The server may be configured for performing other predictions for the system (e.g., more complex and time-consuming predictions), such as in-depth predictions requiring high computing capacity. The server is also connected to the graphical user interface 430 (such as a Humain Machine Interface) for planning maintenance of the system. For example, the graphical user interface 430 may be used by a user for planning actions to be taken for repairing the system according to the predicted remaining time before failure. The Cloud platform 410 allows historizing data of the identical systems (same supplier and same system), so as to train the prediction algorithms, enabling to achieve very high predictive accuracy, and ultimately, to make the results of the method more robust.

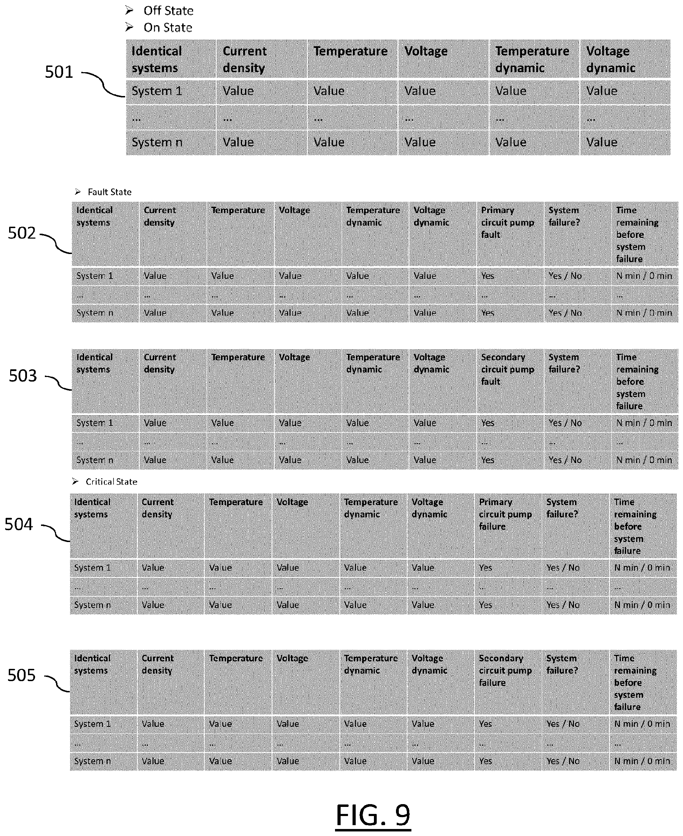

FIG. 9 illustrates an example of the experimental database. In this example, the experimental database comprises, for each state, a respective table storing a list of values for a set of n identical systems in that state. In particular, the experimental database includes the table 501 listing values for the normal state (ON and OFF), the tables 502 and 503 listing values for the fault state (one for the primary circuit and the other for the secondary circuit) and the tables 504 and 505 listing values for the critical state (one for the primary circuit and the other for the secondary circuit).

## Claims

1. A computer-implemented method for predictive maintenance of a system, the system comprising a hydrogen energy component, a cooling circuit, at least one actuator of the cooling circuit and at least one sensor collecting operating data during an operating of the system, the collected operating data including temperature, current density and voltage values at the terminals of the hydrogen energy component, the system being connected to a server including a database, the system further comprising a memory storing a classification algorithm trained for estimating a state of the system among a predetermined set of states including a normal state, a fault state and a critical state, the method comprising, during the operating of the system:
- obtaining the operating data collected by the at least one sensor;
- estimating that a current state of the system is the fault state by applying the classification algorithm to the obtained operating data; and
- predicting a future state of the system by:
∘ predicting an evolution of the temperature and the voltage as a function of current density at the terminals of the hydrogen energy component; and
∘ predicting the future state of the system by applying the classification algorithm to the predicted evolution of the temperature and the voltage as a function of current density at the terminals of the hydrogen energy component.

2. The method of claim 1, wherein the memory further stores a first algorithm predicting an evolution of the temperature as a function of current density of the hydrogen energy component and a second algorithm predicting an evolution of the voltage as a function of current density at the terminals of the hydrogen energy component, the predicting of the evolution of the temperature and the voltage comprising applying the first and second algorithms to the obtained operating data.

3. The method of claim 1 or 2, wherein the classification algorithm takes as input the temperature, current density and voltage values for estimating the current state of the system.

4. The method of any of claims 1 to 3, wherein the system comprises several actuators of the cooling circuit, the database storing an experimentation database of actuator faults and breakdowns, the method comprising, after the estimating of the current state:
- determining which of the several actuators is causing the fault state of the system by comparing the collected operating data with values stored in the experimentation database in real time data.

5. The method of any of claims 1 to 4, wherein the predicted future state is the normal state, the method further comprising:
- repeating the estimating of the current state based on the collected data and the predicting of the future state of the system when the predicted current state is the fault state.

6. The method of any of claims 1 to 4, wherein the predicted future state is the fault state, the method further comprising:
- iteratively repeating the predicting of the future state of the system for successive time steps until the predicted state become the normal state or the critical state.

7. The method of any of claims 1 to 4, wherein the predicted future state is the critical state, the database storing the experimentation database of actuator faults and breakdowns, the method further comprising:
- planning maintenance of the system by consulting the experimentation database.

8. The method of claim 7, wherein the planning of the maintenance of the system comprises:
- predicting a time to failure of the system;
- determining actions to be taken to repair the system; and
- providing to a user, via a human machine interface, the time to failure and the determined actions to repair the system.

9. The method of claim 7 or 8, wherein the method further comprises:
- controlling the operating of the system so that it remains functional at least until the planned maintenance by reducing the current used by the system to a value not resulting in system breakdown.

10. The method of any of claims 1 to 9, wherein the database stores data histories of several identical systems comprising collected data and corresponding observed actuator faults and breakdowns, the data histories having been stored on the database using a forgetting factor to eliminate redundant data, the learning of the classification algorithm being performed on the data histories.

11. The method of any of claims 1 to 10, wherein the hydrogen energy component is an open-cathode Proton Exchange Membrane Fuel Cell (PEMFC), the cooling circuit being an air cooling circuit, the at least one actuator including a ventilator.

12. The method of any of claims 1 to 10, wherein the hydrogen energy component is a closed-cathode Proton Exchange Membrane Fuel Cell (PEMFC), the cooling circuit being a water cooling circuit, the cooling circuit comprising a primary circuit and a secondary circuit, the system comprising at least two actuators including two pumps, respectively for the primary circuit and the secondary circuit, optionally the collected operating data further including temperature and voltage dynamics.

13. The method of any of claims 1 to 10, wherein the hydrogen energy component is a Proton Exchange Membrane Water Electrolyzer (PEMWE), the cooling circuit being a water cooling circuit, the cooling circuit comprising a primary circuit and a secondary circuit, the system comprising at least two actuators including two pumps, respectively for the primary circuit and the secondary circuit, optionally the collected operating data further including temperature and voltage dynamics.

14. A computer program comprising instructions which, when executed by a computer, cause the computer to carry out the method of any of claims 1 to 13.

15. A computer readable storage medium having recorded thereon the computer program of claim 14.

16. A system comprising a hydrogen energy component, a cooling circuit, at least one actuator of the cooling circuit and at least one sensor collecting operating data during an operating of the system, the system being configured for performing the method any of claims 1 to 13.
